Europäisches Patentamt

European Patent Office

Office européen des brevets

(19)

(11) Veröffentlichungsnummer: **0 155 446**
**B1**

(12) **EUROPÄISCHE PATENTSCHRIFT**

(45) Veröffentlichungstag der Patentschrift:
14.10.87

(21) Anmeldenummer: 85100261.8

(22) Anmeldetag: 12.01.85

(51) Int. Cl.⁴: **G 03 B 1/00,** G 06 K 13/12,
G 03 B 1/32, G 03 B 27/53

(54) **Übergabeeinrichtung für Filmkarten.**

(30) Priorität: 08.02.84 DE 3404384

(43) Veröffentlichungstag der Anmeldung:
25.09.85 Patentblatt 85/39

(45) Bekanntmachung des Hinweises auf die Patenterteilung:
14.10.87 Patentblatt 87/42

(84) Benannte Vertragsstaaten:
AT BE CH DE FR GB IT LI LU NL SE

(56) Entgegenhaltungen:
DE-A-2 914 969
DE-A-3 239 703
DE-B-1 246 291
DE-B-2 119 430
FR-A-2 354 599

(73) Patentinhaber: MAP Mikrofilm Apparatebau Dr.
Poehler GmbH & Co. KG, Schulstrasse 2, D-6352
Ober- Mörlen (DE)

(72) Erfinder: Dziemba, Peter, Ahornweg 17, D-6350 Bad
Nauheim (DE)
Erfinder: Wenderoth, Karl, Höhenweg 31, D-6368
Bad Vilbel (DE)

(74) Vertreter: Schlagwein, Udo, Dipl.- Ing.,
Anwaltsbüro Ruppert & Schlagwein
Bahnhofsallee 11, D-6350 Bad Nauheim (DE)

EP 0 155 446 B1

LIBER, STOCKHOLM 1987

## Beschreibung

Die Erfindung bezieht sich auf eine Übergabeeinrichtung zum Überführen einer zwischen zwei Geradführungen geführten Filmkarte oder eines vergleichbaren Gegenstandes von einer Position in eine andere, beispielsweise zum Überführen einer Filmkarte von einer Filmbühne in eine Filmkassette, wobei zum Greifen und Fördern der Filmkarte oder des vergleichbaren Gegenstandes am übergabeseitigen Ende einer Geradführung eine quer zur Filmkarte bzw. des vergleichbaren Gegenstandes bewegbare Transporteinrichtung vorgesehen ist, welche zwei zangenartig gegen die Filmkarte bzw. des vergleichbaren Gegenstandes bewegbare, in Greifstellung zueinander in einem spitzen Winkel stehende, drehbare Scheiben aufweist, von denen zumindest eine Scheibe mit einem im Drehsinn umsteuerbaren Motor versehen ist. Eine solche Übergabeeinrichtung ist Gegenstand der DE-OS 32 39 703.

Bei der in der DE-OS 32 39 703 beschriebenen Ausführungsform sind die Scheiben an jeweils einem Ende eines relativ langen Hebels angeordnet. Wenn diese beiden Hebel in Richtung der Filmkarte schwenken, dann nähern sich die Scheiben einander, so daß die jeweilige Filmkarte gegriffen und transportiert werden kann. Da es erforderlich ist, daß eine Scheibe schräg zur Filmkarte in die jeweilige Förderrichtung schwenkt, ist eine Scheibe derart schwenkbar an dem zugeordneten Hebel gelagert, daß sie selbsttätig in die jeweilige Förderrichtung kippen kann.

Die mit Übergabeeinrichtungen zu transportierenden Filmkarten oder vergleichbaren Gegenstände sind oftmals unterschiedlich dick und häufig auf Grund von Eigenspannungen in sich gewellt. Solche Unterschiede in der Beschaffenheit der zu transportierenden Gegenstände machen es bei der Einrichtung nach dem Hauptpatent erforderlich, die gesamte Einrichtung für den jeweiligen Einsatzfall durch entsprechende Bemessung der Hebel zu optimieren. Es müssen also für verschiedene Anwendungsfälle stark unterschiedliche Übergabeeinrichtungen gefertigt werden, was kostenungünstig ist.

Der Erfindung liegt die Aufgabe zugrunde, die Übergabeeinrichtung derart weiterzuentwickeln, daß auch unterschiedlich beschaffene Gegenstände ganz ohne oder mit nur sehr geringen Abänderung der Einrichtung von ihr zuverlässig transportiert werden können.

Diese Aufgabe wird erfindungsgemäß dadurch gelöst, daß zur Halterung der Scheiben zwei schwenkbar an einer quer zur Förderrichtung beweglichen Schwinge gelagerte Kipphebel vorgesehen sind, welche an ihren den Scheiben abgewandten Hebelseiten zur Steuerung der Zustellbewegung der Scheiben jeweils über eine Kulissenführung ortsfest abgestützt sind.

Durch diese erfindungsgemäße Gestaltung wird die Zuspannbewegung durch die beiden Kulissenführungen gesteuert. Dadurch kann man diese Bewegung so auslegen, daß die zu fördernden Filmkarten bzw. vergleichbaren Gegenstände optimal gegriffen und transportiert werden. Für unterschiedliche Anwendungsfälle kann man die Lage der ortsfesten Stifte der Kulissenführungen verstellen, so daß mit geringem Aufwand eine Justage der Übergabeeinrichtung möglich ist. Ein weiterer Vorteil der erfindungsgemäßen Übergabeeinrichtung besteht darin, daß alle ihre Teile zu einer gemeinsamen Baugruppe zusammengefaßt werden können, und damit keine Hebel an verschiedenen Stellen des Gerätes angelenkt werden müssen, für das die Übergabeinrichtung bestimmt ist. Die Funktionstüchtigkeit der Übergabeeinrichtung kann deshalb schon vor ihrem Einbau in das jeweilige Gerät überprüft werden.

Konstruktiv vorteilhaft ist es, wenn die Kipphebel von einer gemeinsamen Kipphebelachse an der Schwinge gelagert sind. Dabei können sich die Kipphebel zangenartig überkreuzen. Notwendig ist das jedoch nicht, denn die Zustellbewegung kann beliebig durch die Kulissenführungen gesteuert werden.

Eine vorteilhafte Ausgestaltung der Erfindung besteht darin, daß eine Scheibe an einem Träger befestigt ist, der um eine quer zur Förderrichtung angeordneten Achse zwischen zwei Anschlägen schwenkbar mit dem zugeordneten Kipphebel verbunden ist.

Schon bei der Übergabeeinrichtung gemäß der DE-OS 32 39 703 war eine Verschwenkbarkeit einer Scheibe in die jeweilige Förderrichtung vorgesehen. Diese war jedoch derart, daß die sich berührenden Zonen der Scheiben geringfügig ungleichartige Bewegungen ausführten, was zu Schubkräften in der Filmkarte und damit zu Abrieb sowie Bewegungsenergieverlusten führte. Durch die jetzt vorgenommene Gestaltung werden diese Mängel behoben. Auch im gekippten Zustand verbleiben die beiden Scheiben in einer konturendeckenden Position und es wird sichergestellt, daß keine Relativgeschwindigkeiten in den Berührungszonen eintreten.

Durch die Zustellbewegung hat die in Förderrichtung geschwenkte Scheibe die Tendenz, zurück in eine waagerechte Position zu gelangen. Wenn jedoch der Träger durch eine Feder gegen einen seiner beiden Anschläge gehalten und ein Hubmagnet zum Schwenken des Trägers gegen den anderen Anschlag vorgesehen ist, dann läßt sich die Kippbewegung zwangssteuern, was zu einer zuverlässigeren Förderung der Filmkarten oder vergleichbaren Gegenständen führt.

Konstruktiv besonders einfach gestaltet sich die Kulissenführung, wenn an den den Scheiben abgewandten Hebelseiten der Kipphebel jeweils eine Kulissenführung vorgesehen ist, in die jeweils ein ortsfester Stift ragt.

Eine Einstellmöglichkeit des Zuspannhubs und der Zuspannebene erhält man, wenn die beiden Stifte jeweils exzentrisch an einem Verstellbolzen vorgesehen sind.

Durch die im Anspruch 7 angegebene Formgebung der Kulissenführungen erreicht man, daß die beiden Scheiben während der Bewegung von einer seitlichen Position bis über die Filmkarten oder vergleichbaren Gegenständen, zunächst keine Zuspannbewegung ausführen. Betrachtet man die beiden Scheiben als Zangenbacken, so ist zu sagen, daß diese Zange mit geöffnetem Maul über die Filmkarten zu greifen vermag und erst dann schließt.

Die Bewegung der Übergabeeinrichtung aus einer Ruhestellung bis in den Übergabebereich, in dem die zu fördernde Filmkarte oder der vergleichbare Gegenstand gegriffen werden soll, läßt sich am einfachsten erreichen, wenn die Schwinge mittels einer Feder in eine Ruhestellung gehalten ist und die Übergabeeinrichtung einen Hubmagneten zum Verschieben der Schwinge in eine Arbeitsstellung der beiden Scheiben hat.

Um Filmkarten in einer Kassette mit der erfindungsgemäßen Übergabeeinrichtung greifen zu können, ist es erforderlich, daß die Kassette an einer Ecke eine Aussparung hat. Dort sind die Filmkarten dann nicht geführt. Das kann zur Folge haben, daß die Filmkarten im Bereich dieser Aussparung an ihren vorderen Kanten ungleichen, gegenseitigen Abstand haben. Durch den im Anspruch 9 angegebenen Separator lassen sich die Filmkarten selbst dann separieren, so daß eine gewünschte Filmkarte von den Scheiben gegriffen und transportiert werden kann.

Durch die im Anspruch 10 angegebenen Merkmale des Separators erreicht man, daß die jeweilige Filmkarte statt von vorn weiter hinten, nahe ihrer Führung durch die Kassette in den Separator eingefädelt wird. Man kann deshalb auch dann zuverlässig einzelne Filmkarten greifen, wenn diese sich mit ihren vorderen Stirnseiten berühren.

Günstig ist es auch, wenn der Separator mittels einer Feder in Richtung der Filmkarte oder des vergleichbaren Gegenstandes vorgespannt ist, mit einem Nocken gegen die Achse der Kipphebel anliegt und durch Langlöcher in seinem der Achse folgenden Hub begrenzt ist. Der Separator vermag dann den Scheiben vorzueilen, die Filmkarten zu separieren und dann stillzustehen, damit die Scheiben weiter vor fahren können, um die Filmkarte zu greifen und zu transportieren.

Die Erfindung läßt verschiedene Ausführungsformen zu. Eine davon ist in der Zeichnung dargestellt und wird nachfolgend beschrieben. Die Zeichnung zeigt in

Fig.1 eine Seitenansicht der erfindungsgemäßen Übergabeeinrichtung,

Fig.2 eine Seitenansicht des oberen Bereiches der Übergabeeinrichtung gemäß Fig.1, wobei der Übersicht halber einige Einzelteile weggelassen wurden,

Fig. 3 einen Träger als Einzelteil der Übergabeeinrichtung,

Fig. 4 einen oberen Kipphebel als Einzelteil der Übergabeeinrichtung,

Fig. 5 einen unteren Kipphebel als Einzelteil der Übergabeeinrichtung,

Fig. 6 eine Draufsicht auf die erfindungsgemäße Übergabevorrichtung gemäß Fig. 1,

Fig. 7 einen senkrechten Schnitt entlang der Linie VII - VII in Figur 6,

Fig. 8 eine weitere Seitenansicht der Übergabeeinrichtung.

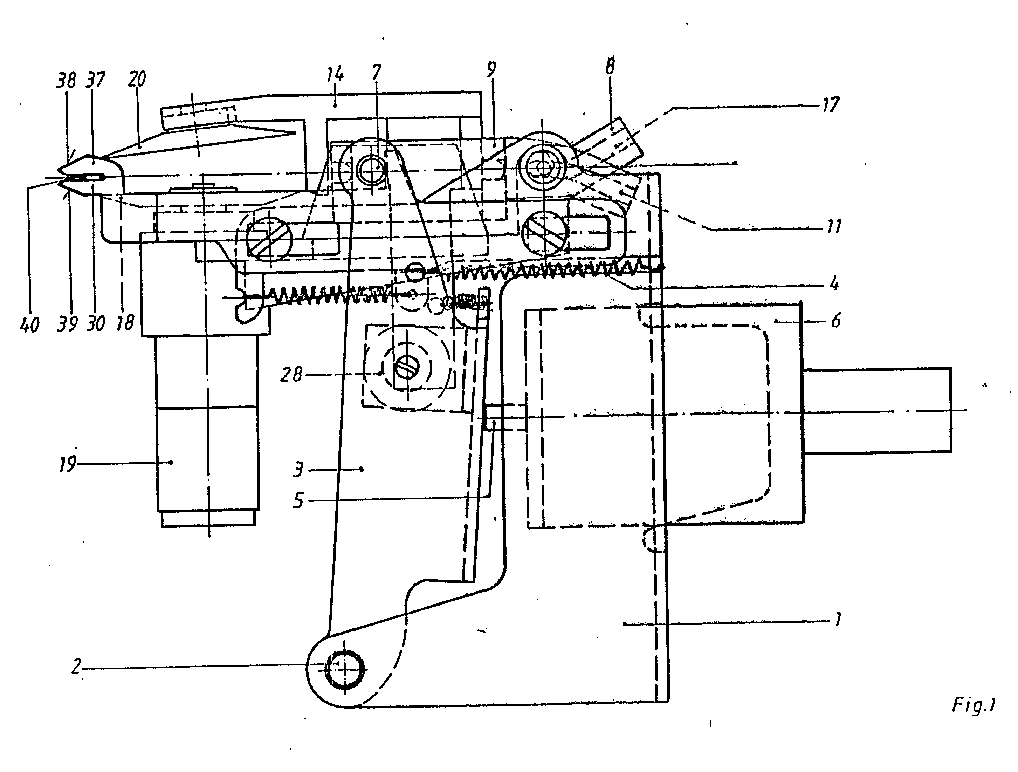

Die Figur 1 zeigt einen Rahmen 1, auf dem mittels einer Achse 2 eine Schwinge 3 gelagert ist. Eine Zugfeder 4, die zwischen der Schwinge 3 und dem Rahmen 1 gespannt ist, hält die Schwinge 3 vor einem Stößel 5 eines Hubmagneten 6. Durch Erregung dieses Hubmagneten 6 wird die Schwinge 3 aus der dargestellten Grundposition in eine Arbeitsstellung entgegen dem Uhrzeigersinn, also in der Zeichnung gesehen nach links, geschwenkt.

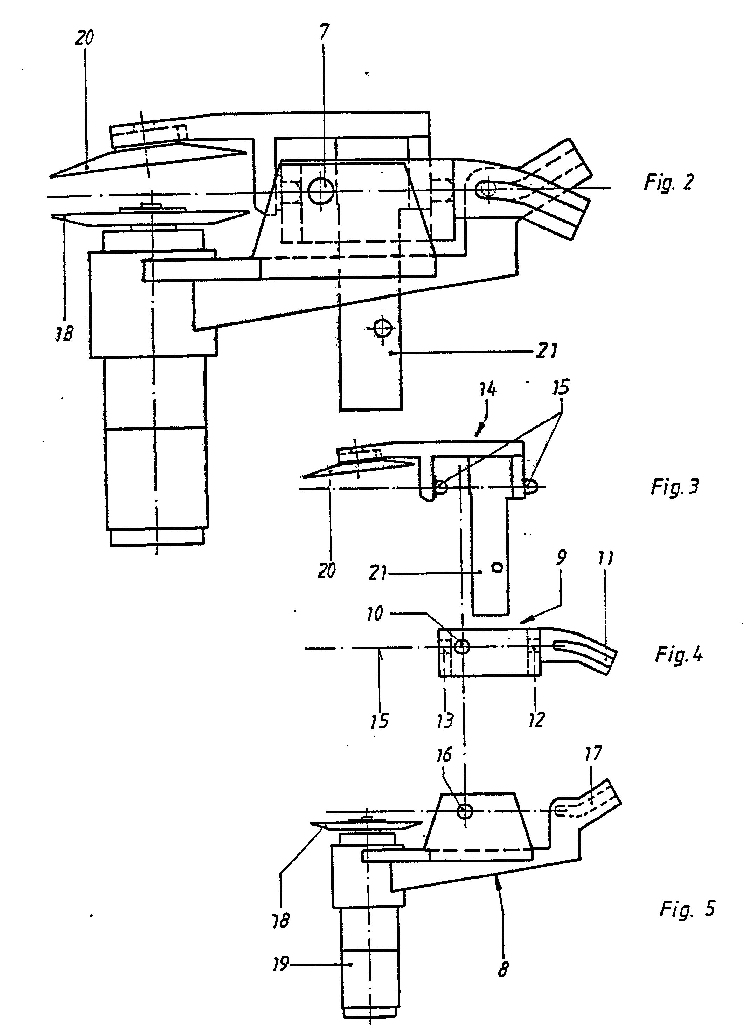

Am freien Ende dieser Schwinge 3 sind mittels einer gemeinsamen Kipphebelachse 7 zwei Kipphebel 8, 9 gelagert. Die genauere Gestaltung dieser Kipphebel 8, 9 ist am leichtestens den Figuren 4 und 5 entnehmbar. Die Figur 4 zeigt den oberen Kipphebel 9 als Einzelteil, während in Figur 5 der untere Kipphebel als Einzelteil dargestellt ist. Figur 4 läßt im oberen Kipphebel 9 eine Bohrung 10 erkennen, durch die im montierten Zustand die Kipphebelachse 7 führt. Dieser obere Kipphebel 9 hat an seinem in der Zeichnung gesehen rechten Ende eine zunächst in etwa waagerecht verlaufende, dann jedoch schräg nach unten gerichtete Kulissenführung 11. Weiterhin hat der Kipphebel 9 zwei horizontale Bohrungen 12, 13, in die ein in Figur 3 dargestellter Träger 14 derart einsetzbar ist, daß er um eine horizontale Achse 15, welche quer zur Kipphebelachse 7 verläuft, schwenkbar ist.

Wie Figur 5 zeigt, hat der untere Kipphebel 8 ebenfalls eine Bohrung 16, so daß ebenfalls durch ihn hindurch die Kipphebelachse 7 geführt werden kann. Ebenfalls in Übereinstimmung mit dem oberen Kipphebel 9 hat der untere Kipphebel an seinem in der Zeichnung gesehen linken Ende eine Kulissenführung 17, die ebenfalls zunächst in etwa waagerecht, dann jedoch schräg nach oben verläuft. Am der Kulissenführung 17 gegenüberliegenden Ende des unteren Kipphebels 8 ist auf ihm eine Scheibe 18 angeordnet, welche von einem Motor 19 in beide Drehrichtungen antreibbar ist.

Der in Figur 3 gezeigte Träger 14 haltert drehbar eine zweite Scheibe 20, die jedoch nicht angetrieben ist und im montierten Zustand der Scheibe 18 gegenüberliegt. Um die Kippbewegung des Trägers 14 auf dem Kipphebel 9 erzwingen und begrenzen zu können, hat der Träger 14 einen nach unten gerichteten Lappen 21, auf den später noch eingegangen wird.

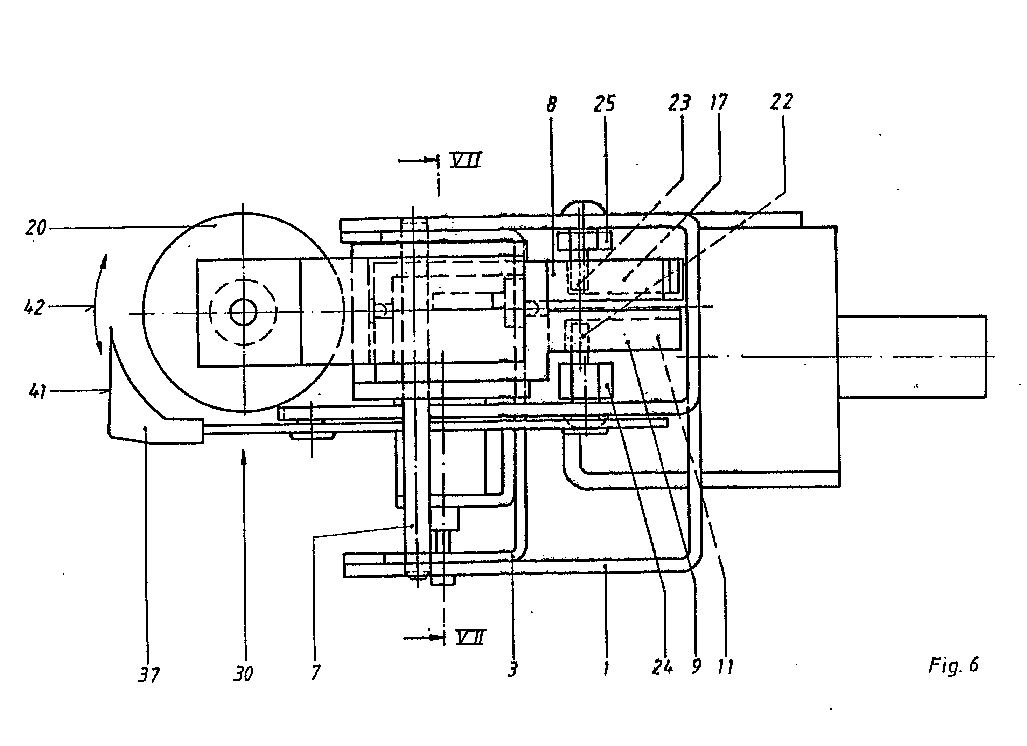

Zum weiteren Verständnis der Erfindung sei nun vor allem auf die Figur 6 Bezug genommen. Man erkennt zunächst den Rahmen 1 mit der von der Achse 2 gelagerten Schwinge 3 sowie die Kipphebelachse 7, welche die Kipphebel 8, 9 haltert. In die Kulissenführungen 17 und 11 ragt jeweils von der Seite her ein Stift 22, 23. Diese Stifte 22, 23 sind jeweils exzentrisch an einem Verstellbolzen 24, 25 vorgesehen, der im Rahmen 1 verdrehbar befestigt ist. Durch Drehen an diesen Verstellbolzen 24, 25 kann man die Lage der Stifte 21, 22 verändern und damit die beiden Kipphebel 8, 9 verstellen.

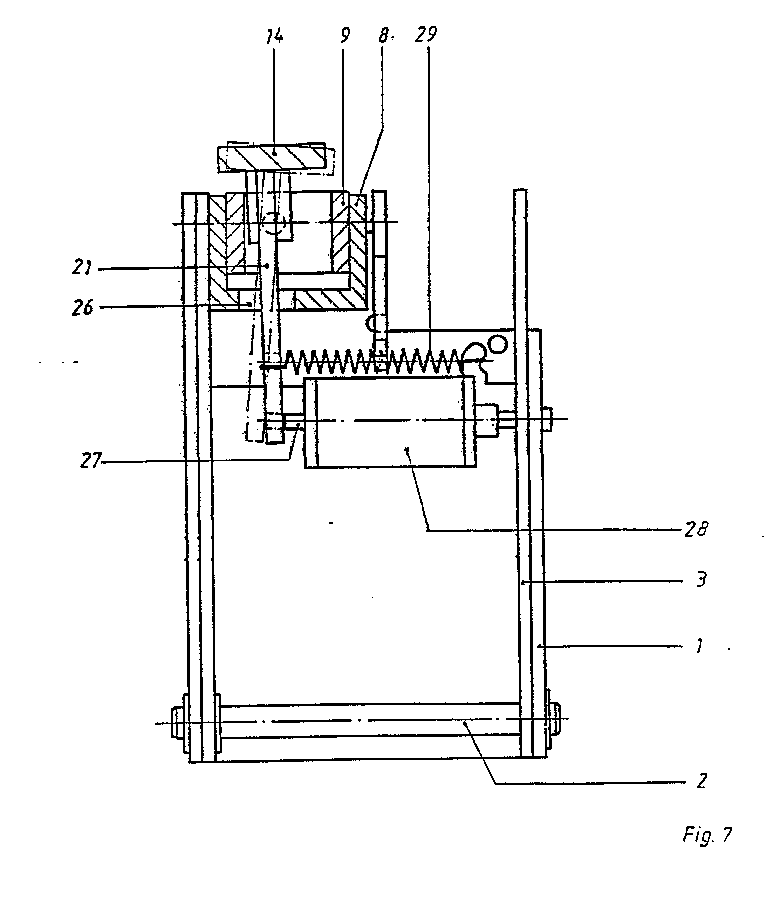

Die Figur 7 verdeutlicht, wie der Träger 14 relativ zum Kipphebel 9 kippbar angeordnet ist. Man sieht, daß der Lappen 21 durch einen Durchbruch 26 des Kipphebels 8 hindurchgeführt ist und gegen einen Stößel 27 eines weiteren Hubmagneten 28 anliegt. Dieser Hubmagnet 28 ist an der Schwinge 3 befestigt. Eine Zugfeder 29, die zwischen dem Lappen 21 und der Schwinge 3 gespannt ist, hält den Lappen 21 in Anlage an den Stößel 27. Wird der Hubmagnet 28 erregt, dann bewegt sich der Stößel 27 in der Zeichnung gesehen nach links, so daß der Träger 14 im Uhrzeigersinn in die gestrichelt dargestellte Endstellung kippt.

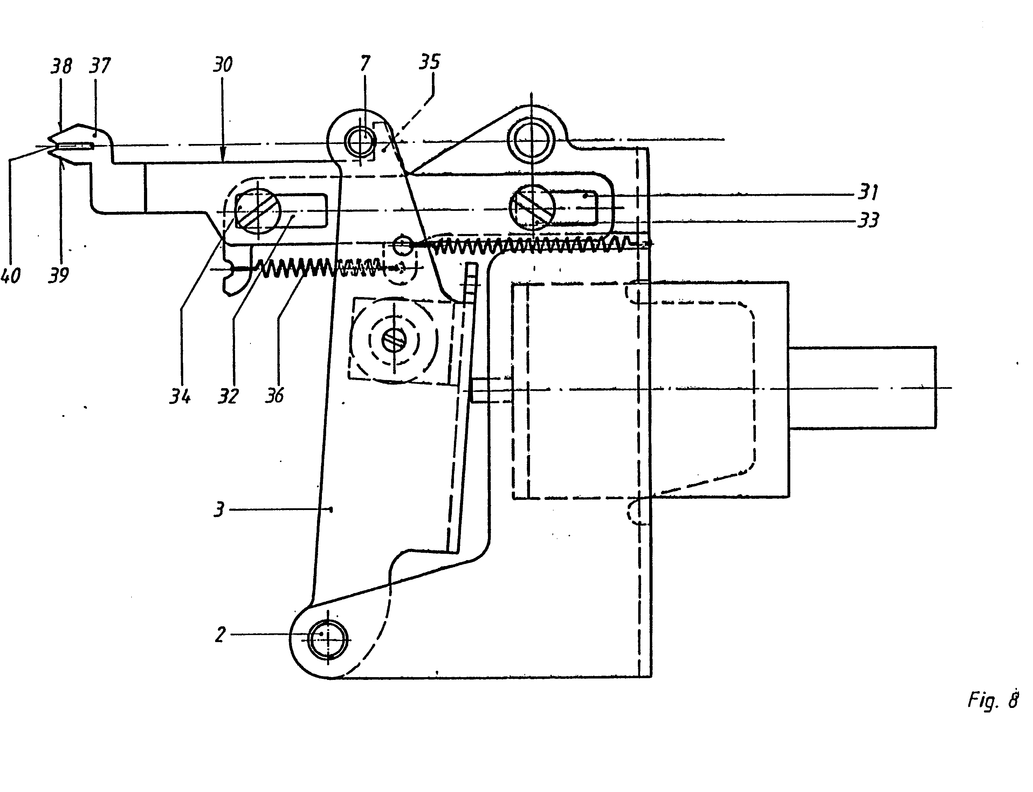

Die dargestellte Übergabeeinrichtung wurde zum Transport von Filmkarten von einer Kassette zur Filmbühne eines Mikrofilm-Lesegerätes bzw. in umgekehrter Richtung konzipiert. Die Filmkarten sind dort, wo die Übergabeeinrichtung arbeiten kann, von der Kassette nicht geführt. Deshalb können die ihr zugewandten Kanten der Filmkarten unregelmäßig ausgerichtet sein und oftmals sogar aufeinanderstoßen. Deshalb ist der Einsatz eines Separators notwendig, dessen Gestaltung sich vor allem aus Figur 8 ergibt.

Bei dem Separator 30 handelt es sich um ein im wesentlichen flaches Bauteil, welches zwei Langlöcher 31, 32 hat, durch die jeweils eine Schraube 33, 34 derart greift, daß der Separator 30 in Figur 8 gesehen nach links entsprechend der Länge der Langlöcher 31, 32 verschieblich ist. In der dargestellten Grundstellung kann sich der Separator 30 jedoch nicht nach links bewegen, da er mit einem Nocken 35 gegen die Kipphebelachse 7 anliegt. Schwingt die Schwinge 3 jedoch entgegen dem Uhrzeigersinn, dann folgt der Separator 30 zunächst dieser Bewegung, da eine Zugfeder 36 ihn in diese Richtung vorspannt. Bevor die Schwinge 3 jedoch ihre Endstellung erreicht hat, begrenzen die Langlöcher 31, 32 den weiteren Weg des Separators 30. Die in Figur 1 dargestellten Scheiben 18, 20 können sich deshalb weiter in den Figuren gesehen nach links bewegen, als der Separator.

Die Separierwirkung des Separators kommt durch einen besonders gestalteten Separatorkopf 37 zustande. Dieser hat zwischen zwei divergierenden Separierflächen 38, 39 einen Schlitz 40, in den jeweils eine zu fördernde Filmkarte zu gelangen vermag. Für die Funktion des Separators ist noch wichtig, daß die vorderste Kante 41 des Separatorkopfes 37 etwas schräg zur Förderrichtung verläuft, was in Figur 6 zu erkennen ist. Die Förderrichtung wurde dort durch einen Pfeil 42 markiert. Dieser schräge Verlauf der Kante 41 hat zur Folge, daß die zu fördernden Filmkarten an der am weitesten von den Scheiben 18, 20 entfernten Ecke in den Schlitz 40 des Separatorkopfes 37 eingefädelt werden.

Die beschriebene Übergabeeinrichtung arbeitet wie folgt: Soll eine Filmkarte transportiert werden, dann wird die Schwinge 3 durch Erregung des Hubmagneten 6 entgegen dem Uhrzeigersinn verschwenkt. Die Kipphebelachse 7 bewegt dabei die Kipphebel 8, 9 in der Zeichnung gesehen nach links. Durch die Kulissenführungen 11, 17 ergibt es sich, daß die Scheiben 18, 20 zunächst ihren gegenseitigen Abstand nicht oder kaum verändern, gegen Ende der Schwenkbewegung der Schwinge 3 jedoch eine relativ rasche Zustellbewegung ausführen und dadurch die zu fördernde Filmkarte zangenartig greifen. Durch den Motor 19 werden die Scheiben 18, 20 angetrieben, so daß die gewünschte Förderbewegung eintritt. Genau wie bei der Übergabeeinrichtung nach der DE-OS 32 39 703, schwenkt die Scheibe 20 in die jeweilige Förderrichtung, was durch Erregung des Hubmagneten 28 zwangsweise erreicht wird.

Bevor die zu fördernde Filmkarte zwischen die Scheiben 18, 20 gelangt, greift der Schlitz 40 des Separatorkopfes 37 über sie, so daß die entsprechende Kante der Filmkarte exakt geführt ist, wenn die Scheiben 18, 20 sie greifen.

**Auflistung der verwendeten Bezugszeichen**

1 Rahmen
2 Achse
3 Schwinge
4 Zugfeder
5 Stößel
6 Hubmagnet
7 Kipphebelachse
8 Kipphebel
9 Kipphebel
10 Bohrung
11 Kulissenführung
12 Bohrung
13 Bohrung
14 Träger
15 Achse
16 Bohrung
17 Kulissenführung
18 Scheibe
19 Motor
20 Scheibe
21 Lappen
22 Stift

23 Stift
24 Verstellbolzen
25 Verstellbolzen
26 Durchbruch
27 Stößel
28 Hubmagnet
29 Zugfeder
30 Separator
31 Langloch
32 Langloch
33 Schraube
34 Schraube
35 Nocken
36 Zugfeder
37 Separatorkopf
38 Separierfläche
39 Separierfläche
40 Schlitz
41 Kante
42 Pfeil

**Patentansprüche**

1. Übergabeeinrichtung zum Überführen einer zwischen zwei Geradführungen geführten Filmkarte oder eines vergleichbaren Gegenstandes von einer Position in eine andere, beispielsweise zum Überführen einer Filmkarte von einer Filmbühne in eine Filmkassette, wobei zum Greifen und Fördern der Filmkarte oder des vergleichbaren Gegenstandes am übergabeseitigen Ende einer Geradführung eine quer zur Filmkarte bzw. des vergleichbaren Gegenstandes bewegbare Transporteinrichtung vorgesehen ist, welche zwei zangenartig gegen die Filmkarte bzw. des vergleichbaren Gegenstandes bewegbare, in Greifstellung zueinander in einem spitzen Winkel stehende, drehbare Scheiben (18, 20) aufweist, von denen zumindest eine Schiebe (18) mit einem im Drehsinn umsteuerbaren Motor (19) versehen ist, dadurch gekennzeichnet, daß zur Halterung der Scheiben (18, 20) zwei schwenkbar an einer quer zur Förderrichtung beweglichen Schwinge (3) gelagerte Kipphebel (8, 9) vorgesehen sind, welche an ihren den Scheiben (18, 20) abgewandten Hebelseiten zur Steuerung der Zustellbewegung der Scheiben (18, 20) jeweils über eine Kulissenführung (11, 17) ortsfest abgestützt sind.

2. Übergabeeinrichtung nach Anspruch 1, dadurch gekennzeichnet, daß die Kipphebel (8, 9) von einer gemeinsamen Kipphebelachse (7) an der Schwinge (3) gelagert sind.

3. Übergabeeinrichtung nach Anspruch 1, oder einem der folgenden, dadurch gekennzeichnet, daß eine Scheibe (20) an einem Träger (14) befestigt ist, der um eine quer zur Förderrichtung angeordnete Achse (15) zwischen zwei Anschlägen schwenkbar mit dem zugeordneten Kipphebel (9) verbunden ist.

4. Übergabeeinrichtung nach Anspruch 1 oder einem der folgenden, dadurch gekennzeichnet, daß der Träger (14) durch eine Zugfeder (29) gegen einen seiner beiden Anschläge gehalten und ein Hubmagnet (28) zum Schwenken des Trägers (14) gegen den anderen Anschlag vorgesehen ist.

5. Übergabeeinrichtung nach Anspruch 1 oder einem der folgenden, dadurch gekennzeichnet, daß an den den Scheiben (18, 20) abgewandten Hebelseiten der Kipphebel (8, 9) die Kulissenführung (11, 17) vorgesehen ist, in die jeweils ein ortsfester Stift (22, 23) ragt.

6. Übergabeeinrichtung nach Anspruch 1 oder einem der folgenden, dadurch gekennzeichnet, daß die beiden Stifte (22, 23) jeweils exzentrisch an einem Verstellbolzen (24, 25) vorgesehen sind.

7. Übergabeeinrichtung nach Anspruch 1 oder einem der folgenden, dadurch gekennzeichnet, daß die Kulissenführungen (11, 17) zunächst einen tangential zum Schwenkkreis der Schwinge (3) gerichteten Bereich, dann jedoch einen schräg dazu gerichteten Bereich haben.

8. Übergabeeinrichtung nach Anspruch 1 oder einem der folgenden, dadurch gekennzeichnet, daß die Schwinge (3) mittels einer Zugfeder (4) in eine Ruhestellung gehalten ist und die Übergabeeinrichtung einen Hubmagneten (6) zum Verschieben der Schwinge (3) in eine Arbeitsstellung der beiden Scheiben (18, 20) hat.

9. Übergabeeinrichtung nach Anspruch 1 oder einem der folgenden, dadurch gekennzeichnet, daß zumindest an einer Seite der Kipphebel (8, 9) ein den Scheiben (18, 20) zunächst in Richtung der zu fördernden Filmkarten oder vergleichbaren Gegenständen voreilender, dann jedoch stillstehender Separator (30) vorgesehen ist, der zwischen zwei Separierflächen (38, 39) einen die Filmkarten oder vergleichbaren Gegenstände aufnehmenden Schlitz (40) hat.

10. Übergabeeinrichtung nach Anspruch 1 oder einem der folgenden, dadurch gekennzeichnet, daß die den Filmkarten oder vergleichbaren Gegenständen zugewandte Kante (41) des Separatorkopfes (37) in der Ebene der Filmkarten oder vergleichbaren Gegenständen schräg zur Förderrichtung verläuft.

11. Übergabeeinrichtung nach Anspruch 1 oder einem der folgenden, dadurch gekennzeichnet, daß der Separator (30) mittels einer Zugfeder (36) in Richtung der Filmkarte oder des vergleichbaren Gegenstandes vorgespannt ist, mit einem Nocken (35) gegen die Kipphebelachse (7) der Kipphebel (8, 9) anliegt und durch Langlöcher (31, 32) in seinem der Kipphebelachse (7) folgenden Hub begrenzt ist.

**Claims**

1. Delivery facility for transporting a film card or comparable object guided between two straight guides from one position to another, f. i. for transporting a film card from a film card holder into a film card magazine, provided with a movable transporting mechanism for gripping and transporting of the film card or comparable object, being positioned at the end of a straight guide where transport is carried out and being movable at right angles to the film card or comparable object and having two discs which are able to rotate and to perform a pincer-wise motion towards the film card or comparable object and which form an acute angle in gripping position, at least one of these discs being provided with a motor, the direction of rotation of which can be reversed, characterized in that two rocker levers (8, 9) are provided for supporting the discs (18, 20), the rocker levers (8, 9) being mounted pivotably on a swivelling lever (3) that can be moved at right angles in relation to the direction of transport, the rocker levers (8, 9) being stationarily supported via a guide groove (11, 17) at the end of each of the levers (8, 9) pointing away from the discs (18, 20) for purposes of control of the gripping motion performed by the discs (18, 20).

2. Delivery facility according to claim 1, characterized in that the rocker levers (8, 9) are supported on a swivelling lever (3) by means of a mutual rocker lever shaft (7).

3. Delivery facility according to claim 1 or one of the following claims, characterized in that one disc (20) is supported on a carrier (14) which is fixed to the respective rocker lever (9) in a way that it can swivel between two stops around an axis (15) at right angles in relation to the direction of transport.

4. Delivery facility according to claim 1 or one of the following claims, characterized in that the carrier (14) is held against one of its stops by means of a tension spring (29) and that a lifting magnet (28) is provided for purposes of swivelling the carrier (14) towards the other stop.

5. Delivery facility according to claim 1 or one of the following claims, characterized in that the guide groove (11, 17) is provided at the end of each of the rocker levers (8, 9) at the end away from the discs (18, 20), with each groove (11, 17) being engaged by one stationary pin (22, 23).

6. Delivery facility according to claim 1 or one of the following claims, characterized in that both pins (22, 23) are each mounted eccentrically on an adjustment screw (24, 25).

7. Delivery facility according to claim 1 or one of the following claims, characterized in that the path of the guide grooves (11, 17) is initially tangential and then at an inclined angle in relation to the circle of swivel of the swivelling lever (3).

8. Delivery facility according to claim 1 or one of the following claims, characterized in that the swivelling lever (3) is retained in a resting position by means of a tension spring (4) and the delivery facility has a lifting magnet (6) for pushing the swivelling lever (3) into an operating position of the two discs (18, 20).

9. Delivery device according to claim 1 or one of the following claims, characterized in that at least one side of the rocker levers (8, 9) is provided with a separator (30) which first advances the discs (18, 20) in the direction of the film cards or comparable objects to be transported and then comes to a stop, the separator (30) having a slot (40) between two separating surfaces (38, 39) for accommodating film cards or comparable objects.

10. Delivery device according to claim 1 or one of the following claims, characterized in that the edge (41) of the separating head (37) facing the film cards or comparable objects is at an inclined angle in relation to the direction of transport in the plane of the film cards or comparable objects.

11. Delivery device according to claim 1 or one of the following claims, characterized in that the separator (30) is pretensioned in the direction of the film card or comparable object by means of a tension spring (36) and that it rests against the rocker lever shaft (7) of the rocker levers (8, 9) with a cam (35), its stroke following the rocker lever shaft (7) being limited by elongated holes (31, 32).

**Revendications**

1. Dispositif de transfert pour transférer une carte de film, guidée entre deux guides droits, ou un objet similaire d'une position à une autre, par exemple pour le transfert d'une carte de film d'une platine de film dans une cassette de film, dans lequel pour la prise et l'amenée de la carte de film ou de l'objet similaire il est prévu à l'extrémité située côté transfert d'un guide droit un dispositif de transport mobile transversalement par rapport à la carte de film, respectivement l'objet similaire, qui comporte deux disques (18, 20) mobiles à rotation pour former une pince contre la carte de film, respectivement l'objet similaire, disposés en position de prise selon un angle aigu l'un par rapport à l'autre, disques dont au moins l'un d'entre eux (18) est muni d'un moteur (19) pouvant renverser le mouvement dans le sens de rotation, caractérisé en ce que pour le maintien des disques (18, 20) sont prévus deux leviers oscillants (8, 9) montés basculants sur une coulisse (3) mobile transversalement par rapport à la direction d'amenée, leviers qui sur leurs côtés opposés aux disques (18, 20) sont chacun supportés de manière fixe sur un guide coulisse (11, 17) pour la commande du mouvement d'avance des disques (18, 20).

2. Dispositif de transfert selon la revendication 1, caractérisé en ce que les leviers oscillants (8, 9) sont montés sur la coulisse (3) par le biais d'un axe de levier oscillant commun (7).

3. Dispositif de transfert selon la revendication 1 ou l'une des suivantes, caractérisé en ce qu'un disque (20) est fixé à un support (14), qui est relié basculant avec le levier oscillant correspondant entre deux butées, autour d'un axe (15) disposé transversalement par rapport à la direction d'amenée.

4. Dispositif de transfert selon la revendication 1 ou l'une des suivantes, caractérisé en ce que le support (14) est maintenu contre une de ses butées par un ressort de traction (29) et qu'un aimant de levage (25) est prévu pour le basculement du support (14) contre l'autre butée.

5. Dispositif de transfert selon la revendication 1, ou l'une des suivantes, caractérisé en ce que sur les côtés des leviers oscillants (8, 9) opposés aux disques (18, 20) est disposé le guide coulisse (11, 17) dans lequel vient à chaque fois en saillie une goupille fixe (22, 23).

6. Dispositif de transfert selon la revendication 1 ou l'une des suivantes, caractérisé en ce que les deux goupilles (22, 23) sont chacunes montées excentriques sur un boulon de réglage (24, 25).

7. Dispositif de transfert selon la revendication 1 ou l'une des suivantes, caractérisé en ce que les guides coulisses (11, 17) ont tout d'abord une zone dirigée tangentiellement par rapport au cercle de pivotement de la coulisse (3), puis une zone inclinée par rapport à celui-ci.

8. Dispositif de transfert selon la revendication 1 ou l'une des suivantes, caractérisé en ce que la coulisse (3) est maintenue par un ressort de traction (4) en position de repos et que le dispositif de transfert comporte des aimants de levage (6) pour la translation des coulisses (3) dans une position de travail des deux disques (18, 20).

9. Dispositif de transfert selon la revendication 1 ou l'une des suivantes, caractérisé en ce que l'on dispose au moins sur un côté des leviers oscillants (8, 9) un séparateur (30) avançant les disques (18, 20) d'abord en direction des cartes de film ou objets similaires à amener, puis restant fixe, qui comporte entre deux surfaces de séparation (38, 39) une rainure (40) prenant les cartes de film ou objets similaires.

10. Dispositif de transfert selon la revendication 1 ou l'une des suivantes, caractérisé en ce que le chant (41) de la tête de séparateur (37) disposé du côté des cartes de film ou des objets similaires s'étend dans le plan des cartes de film ou objets similaires, inclinée par rapport à la direction d'amenée.

11. Dispositif de transfert selon la revendication 1 ou l'une des suivantes, caractérisé en ce que le séparateur (30) est mis en pré-tension par un ressort de traction (36) en direction de la carte de film ou de l'objet analogue, qu'il est appliqué par un mentonnet (35) contre l'axe de levier oscillant (7) des leviers oscillants (8, 9) et qu'il est limité par des lumières longitudinales (31, 32) dans son mouvement de lever suivant l'axe de levier oscillant (7).

38 37 20

14 7 9 8

17

11

4

6

40 39 30 18

28

19

3

5

2

1

0 155 446

Fig.1

**0 155 446**

Fig. 2

Fig. 3

Fig. 4

Fig. 5

Fig. 6

0 155 446

Fig. 7

Fig. 8

0 155 446